# EUROPÄISCHE PATENTSCHRIFT

(11) **EP 1 702 081 B1**
(45) Veröffentlichungstag und Bekanntmachung des Hinweises auf die Patenterteilung: **27.02.2008**
(21) Anmeldenummer: 04819576.2
(22) Anmeldetag: 13.11.2004
(51) Int. Cl.: C22C 19/05

(54) **WOLFRAMFREIE LOTLEGIERUNG AUF NICKELBASIS MIT EINEM SPEZIELLEN VERHÄLTNIS AUS BOR, YTTRIUM UND PALADIUM**
NICKEL-BASED SOLDER ALLOY, DEVOID OF TUNGSTEN, COMPRISING SPECIFIC RATIOS OF BORON, YTTRIUM AND PALLADIUM
ALLIAGE DE BRASAGE SANS TUNGSTENE A BASE DE NICKEL, COMPORTANT UNE TENEUR PARTICULIERE EN BORE, YTTRIUM ET PALLADIUM

(30) Priorität: 04.12.2003 DE 10356562
(43) Veröffentlichungstag der Anmeldung: 20.09.2006
(73) Patentinhaber: MTU Aero Engines GmbH, 80995 München (DE)
(72) Erfinder: HOPPE, Barbara, 59555 Lippstadt (DE); MUKHERJI, Debashis, 38106 Braunschweig (DE); RÖSLER, Joachim, 38116 Braunschweig (DE); VOSSBERG, Andreas, 30916 Isernhagen (DE)
(86) Internationale Anmeldenummer: PCT/DE2004/002516
(87) Internationale Veröffentlichungsnummer: WO 2005/054528

(56) Entgegenhaltungen:
- EP-A- 1 226 896
- GB-A- 2 153 845
- US-A- 4 288 247
- US-A- 4 830 934
- US-A- 5 240 491
- US-A1- 2002 157 737

## Beschreibung

Die Erfindung betrifft eine Lotlegierung sowie ein Mehrkomponenten-Lötsystem. Weiterhin betrifft die Erfindung die Verwendung einer Lotlegierung und eines Mehrkomponenten-Lötsystems sowie ein Verfahren zur Bearbeitung, insbesondere Reparatur, von Werkstücken, insbesondere von Gasturbinenbauteilen.

Gasturbinen, wie zum Beispiel Flugzeugtriebwerke oder stationäre Gasturbinen, unterliegen im Betrieb einer hohen mechanischen und thermischen Beanspruchung. So können während des Betriebs eines Flugzeugtriebwerks Schaufeln, insbesondere Turbinenschaufeln, durch thermische Wechselbeanspruchung und Materialabtrag beschädigt werden. Daraus resultieren Thermoermüdungsrisse und erodierte Oberflächen, die bei der Wartung bzw. Instandsetzung des Flugzeugtriebwerks vollständig und zuverlässig instandgesetzt werden müssen. Dabei kommen nach dem Stand der Technik neben Schweißverfahren auch Lötverfahren zum Einsatz.

Hierbei werden nach dem Stand der Technik Lötverfahren und Lotwerkstoffe eingesetzt, wie sie zum Beispiel aus US 4,830,934 und US 5,240,491 bekannt sind. Diese aus dem Stand der Technik bekannten Lötverfahren werden zur Reparatur der obigen Schadensbilder sowie als Fügeprozesse bei der Herstellung eines Flugzeugtriebwerks verwendet. Da die Baugruppen eines Flugtriebwerks nach der Reparatur wieder einer hohen mechanischen sowie thermischen Belastung ausgesetzt sind, ist es notwendig, neuartige Lotlegierungen und Lötverfahren zur Verfügung zu stellen.

Die US 2002/0157737 A1 offenbart ein Mehrkomponenten-Lötsystem auf Nickelbasis.

Die EP 1,226,896 A2 offenbart ein Mehrkomponenten-Lötsystem mit einer Komponente, die René 80 sehr ähnlich ist.

Hiervon ausgehend liegt der vorliegenden Erfindung das Problem zu Grunde, eine neuartige Lotlegierung sowie ein neuartiges Mehrkomponenten-Lötsystem zu schaffen. Weiterhin liegt der Erfindung das Problem zu Grunde, eine Verwendung für eine derartiges Lotlegierung sowie derartiges Mehrkomponenten-Lötsystem und ein Verfahren zur Bearbeitung, insbesondere Reparatur, von Werkstücken, insbesondere von Gasturbinenbauteilen, vorzuschlagen.

Dieses Problem wird durch eine Lotlegierung gemäß Patentanspruch 1 gelöst.

Erfindungsgemäß ist die Lotlegierung eine Nickelbasislegierung und enthält mindestens folgende Elemente: Chrom (Cr), Kobalt (Co), Molybdän (Mo) und Nickel (Ni). Das Molybdän (Mo) ersetzt das bei Lotlegierung nach dem Stand der Technik verwendete Wolfram (W). Molybdän (Mo) erhöht zwar durch Mischkristallhärtung die Festigkeit der γ-Nickelmatrix, ohne jedoch den Schmelzpunkt der Lotlegierung im gleichen Ausmaß wie Wolfram (W) unvorteilhaft zu erhöhen.

Die erfindungsgemäße Lotlegierung enthält zusätzlich Tantal (Ta), Niob (Nb) und Aluminium (AI). Hierdurch kann eine zusätzliche Festigkeit durch Teilchenhärtungseffekte erzielt werden. Tantal (Ta), Niob (Nb) und Aluminium (AI) sind γ'-bildende Elemente.

Gemäß der hier vorliegenden Erfindung verfügt die erfindungsgemäße Lotlegierung über folgende Zusammensetzung:
Chrom (Cr) in einem Anteil von 5 - 17 Gew.-%,
Kobalt (Co) in einem Anteil von 8 - 15 Gew.-%,
Molybdän (Mo) in einem Anteil von 1 - 5 Gew.-%,
Aluminium (AI) in einem Anteil von 2 - 8 Gew.-%,
Tantal (Ta) in einem Anteil von 1 - 8 Gew.-%,
Niob (Nb) in einem Anteil von 0,1 - 2 Gew.-%, -
Yttrium (Y) in einem Anteil von 0,1 - 1 Gew.-%,
Hafnium (Hf) in einem Anteil von 1 - 5 Gew.-%,
Palladium (Pd) in einem Anteil von 0,5 - 5 Gew.-%,
Bor (B) in einem Anteil von 0,5 - 2,5 Gew.-%,
Silizium (Si) in einem Anteil von 0,1 - 1 Gew.-%,
Nickel (Ni) im Restanteil, sodass die Summe der Anteile 100 Gew.-% ergibt.

Palladium (Pd) erniedrigt den Schmelzpunkt der Lotlegierung und erhöht durch Mischkristallhärtung die Festigkeit der γ-Nickelmatrix. Weiterhin ist vorteilhaft, dass Palladium (Pd) Benetzungsverhalten und Fließfähigkeit der aufgeschmolzenen Lotlegierung bzw. des aufgeschmolzenen Mehrkomponenten-Lötsystems verbessert.

Das Hafnium (Hf) verbessert wie Palladium (Pd) Benetzungsverhalten und Fließfähigkeit der aufgeschmolzenen Lotlegierung bzw. des. aufgeschmolzenen Mehrkomponenten-Lötsystems und erhöht gleichzeitig die Oxidationsbeständigkeit der gelöteten Bereiche. Um den Anteil an hafniumhaltigen, die Lotgefüge versprödenden Hardphasen gering zu halten, wird der Hafniumanteil auf 5 Gew.-% beschränkt.

Yttrium (Y) erniedrigt wie Palladium (Pd) und Bor (B) den Schmelzpunkt bzw. den Schmelzbereich der Lotlegierung, so dass durch die Elementkombinationen Pd-B-γ gezielt Löttemperaturen im Bereich von 1200 °C bis 1260 °C einstellbar sind.

Der Schmelzbereich ist definiert als das Temperaturintervall zwischen dem Aufschmelzen der ersten Legierungsbestandteile (Soliduspunkt) und dem vollständig flüssigen Zustand (Liquiduspunkt) der betreffenden Legierung.

Durch Zulegieren von Silizium (Si) in einem Anteil von 0,1 bis 1 Gew.-% kann in Kombination mit dem Palladium, Bor und Yttrium der Schmelzpunkt der Lotlegierung weiter abgesenkt werden.

Eine besonders bevorzugte Lotlegierung ist in Patentanspruch 2 definiert, die erfindungsgemäße Verwendung der Lotlegierung gemäß Anspruch 1 (oder 2) ergibt sich aus Patentanspruch 3.

Das erfindungsgemäße Mehrkomponenten-Lötsystem ist in Patentanspruch 4 definiert, die erfindungsgemäße Verwendung desselben in Patentanspruch 8.

Das erfindungsgemäße Verfahren zur Bearbeitung, insbesondere zur Reparatur, von Werkstücken ist durch die Merkmale des Patentanspruchs 9 gekennzeichnet.

Bevorzugte Weiterbildungen der Erfindung ergeben sich aus den abhängigen Unteransprüchen und der nachfolgenden Beschreibung.

Die hier vorliegende Erfindung betrifft den Einsatz eines Lötverfahrens zur Reparatur von thermodynamisch belasteten Bauteilen einer Gasturbine, wie zum Beispiel von Leitschaufeln eines Flugzeugtriebwerks oder auch einer stationären Gasturbine. Die Erfindung betrifft nicht nur das Lötverfahren selbst, sondern vielmehr auch die Bereitstellung einer neuartigen Lotlegierung bzw. eines neuartigen Mehrkomponenten-Lötsystems sowie eine Verwendung der Lotlegierung sowie des Mehrkomponenten-Lötsystems. Die Lotlegierung und das Mehrkomponenten-Lötsystem eignen sich sowohl zur Reparatur von Turbinenteilen, die aus einer polykristallinen Legierung hergestellt sind, als auch für solche Turbinenteile, die aus einer gerichtet erstarrten oder einkristallinen Legierung hergestellt sind. Durch die Anwendung des Lötverfahrens bzw. der Lotlegierung bzw. des Mehrkomponenten-Lötsystems sind in den gelöteten Bereichen der Gasturbinenbauteile ausreichend hohe mechanische Eigenschaften erzielbar, wie insbesondere die Ermüdungsfestigkeiten, so dass die strukturelle Integrität des betreffenden Bauteils einer Gasturbine erhalten bleibt. Weiterhin werden in den gelöteten Bereichen verbesserte Oxidations- und Korrosionseigenschaften gegenüber solchen Bereichen erzielt, die mit Lötverfahren nach dem Stand der Technik repariert werden.

Die neue erfindungsgemäße Lotlegierung ist eine Nickelbasislegierung und enthält neben Nickel (Ni) zumindest auch Chrom (Cr), Kobalt (Co) und Molybdän (Mo). Es liegt im Sinne der hier vorliegenden Erfindung, das bei Lotlegierungen nach dem Stand der Technik verwendete Wolfram (W) zum großen Teil durch Molybdän (Mo) zu ersetzen. Hierdurch wird vorteilhaft die Festigkeit des reparierten Bereichs durch Mischkristallhärtung der y-Nickelmatrix erhöht, ohne dass nachteilig der Schmelzpunkt der Lotlegierung erhöht wird.

Neben Nickel (Ni), Chrom (Cr), Kobalt (Co) und Molybdän (Mo) enthält die erfindungsgemäße Lotlegierung Palladium (Pd) sowie Yttrium (Y). Sowohl das Palladium (Pd) als auch das Yttrium (Y) sind für die Absenkung des Schmelzbereichs der Lotlegierung in einen Bereich von 1050°C bis 1200°C vorteilhaft und verbessern gleichzeitig die Oxidationseigenschaften der Lotlegierung bzw. des gelöteten Bereichs. Das Palladium (Pd) wird vorzugsweise auf einen maximalen Anteil von 5 Gew.-% beschränkt, da es den Lotwerkstoff stark verteuert, wenn es in zu großen Mengenanteilen zulegiert wird.

Ein weiteres Element, welches die erfindungsgemäße Lotlegierung vorzugsweise weiterhin enthält, ist das Bor (B). Das Bor (B) ist wie das Palladium (Pd) und Yttrium (Y) für die Absenkung des Schmelzbereichs der Lotlegierung in einen Bereich von 1050°C bis 1200°C vorteilhaft und wird im Sinne der Erfindung auf einen maximalen Anteil von 2,5 Gew.-% beschränkt. Durch die Beschränkung des Bors (B) auf maximal 2,5 Gew.-% kann der versprödend wirkende Boridphasenanteil in den gelöteten Bereichen wirksam begrenzt werden.

Es liegt weiterhin im Sinne der hier vorliegenden Erfindung, dass die erfindungsgemäße Lotlegierung zusätzlich zu den oben genannten Elementen einen entsprechenden Anteil von Aluminium (AI), Tantal (Ta) und Niob (Nb) enthält. Der Anteil des Aluminiums (AI) liegt vorzugsweise zwischen 2 und 8 Gew.-%. Tantal (Ta) wird in einem Anteil von 1 bis 8 Gew.-% und Niob (Nb) in einem Anteil von 0,1 bis zu 2 Gew.-% in der erfindungsgemäßen Lotlegierung enthalten. Durch die Zulegierung von γ'-Phasen bildenden Elementen, wie Tantal (Ta), Niob (Nb) und Aluminium (Al), wird in den gelöteten Bereichen neben der bereits geschilderten Mischkristallhärtung zusätzliche mechanische Festigkeit durch Teilchenhärtung erzielt.

Zusätzlich enthält die erfindungsgemäße Lotlegierung Hafnium (Hf) in einem Anteil von 1 bis 5 Gew.-% Durch die Verwendung von Hafnium werden die Benetzungs- und Fließeigenschaften der aufgeschmolzenen Lotlegierung und die Oxidationsbeständigkeit der reparierten Bereiche des betreffenden Bauteils positiv beeinflusst. Der Anteil des Hafniums (Hf) wird auf den angegebenen Maximalwert von 5 Gew.-% beschränkt, um den Anteil an versprödend wirkenden hafniumhaltigen Hardphasen in den gelöteten Bereichen zu beschränken.

Weiterhin kann die erfindungsgemäße Lotlegierung Silizium (Si) in einem Anteil von 0,1 bis 1 Gew.-% enthalten. Durch die Zugabe des Siliziums (Si) kann die schmelzpunkterniedrigende Wirkung des Palladiums (Pd), Yttriums (Y) und Bors (B) unterstützt und verstärkt werden, ohne dass der Boridphasenanteil in den repartierten Bereichen des Bauteils erhöht wird.

Nach einem bevorzugten Ausführungsbeispiel der hier vorliegenden Erfindung verfügt die erfindungsgemäße Lotlegierung über folgende Zusammensetzung:
Chrom (Cr) in einem Anteil von 9 - 11 Gew.-%,
Kobalt (Co) in einem Anteil von 9 - 1 Gew.-%,
Molybdän (Mo) in einem Anteil von 3,5 - 4,5 Gew.-%,
Aluminium (Al) in einem Anteil von 3,5 - 4,5 Gew.-%,
Tantal (Ta) in einem Anteil von 1,5 - 2,5 Gew.-%,
Niob (Nb) in einem Anteil von 0,5 - 1,5 Gew.-%,
Yttrium (Y) in einem Anteil von 0,1 - 0,5 Gew.-%,
Hafnium (Hf) in einem Anteil von 3,5 - 4,5 Gew.-%,
Palladium (Pd) in einem Anteil von 3,5 - 4,5 Gew.-%,
Bor (B) in einem Anteil von 1,5 - 2,0 Gew.-%,
Nickel (Ni) im Restanteil, sodass die Summe der Anteile 100 Gew.-% ergibt.

Die erfindungsgemäße Lotlegierung eignet sich besonders zur Verwendung bei der Reparatur von Leitschaufeln eines Flugzeugtriebwerks, wobei die Leitschaufeln entweder aus einer polykristallinen oder gerichtet erstarrten oder einkristallinen Legierung hergestellt sein können. Nach Reparatur der betreffenden Bereiche der Gasturbine mithilfe der Lotlegierung verfügen die gelöteten Bereiche über mechanische Eigenschaften, die weitestgehend dem Material der unbeschädigten Leitschaufel entsprechen. Die Lotlegierung ist speziell für den Zweck der Reparatur von Triebwerksbauteilen angepasst.

Die erfindungsgemäße Lotlegierung verfügt über optimierte Schmelzeigenschaften, Fließeigenschaften und Benetzungseigenschaften sowie über ein optimiertes Rissfüllvermögen.

Der Einfluss der schmelzpunkterniedrigenden Elemente Yttrium (Y) und Palladium (Pd) auf den Schmelzbereich der Lotlegierung wird anhand der folgenden kaloriemetrischen Messungen deutlich.

Im Folgenden werden vier Lotlegierungen A2, A3, A5 und A 10 miteinander verglichen. (Zusammensetzung siehe Tabelle 1).

**Tabelle 1: Zusammensetzungen der Lotlegierungen, Gehalte in Gewichtsprozent.**

| Lotleg. | Ni | Cr | Co | Mo | Al | Ta | Nb | Y | Hf | Pd | B |
|---|---|---|---|---|---|---|---|---|---|---|---|
| A2 | Bal. | 10 | 10 | 4 | 4 | 2 | 1 | 0,5 | 4 | 4 | 1,8 |
| A3 * | Bal. | 10 | 10 | 4 | 4 | 2 | 1 | 0 | 0 | 4 | 1,8 |
| A5 * | Bal. | 10 | 10 | 4 | 4 | 2 | 1 | 0,5 | 0 | 0 | 1,8 |
| A10 * | Bal. | 10 | 10 | 4 | 4 | 2 | 1 | 0 | 4 | 0 | 1,8 |

| | | | | | | | | | | | |
|---|---|---|---|---|---|---|---|---|---|---|---|
| * diese Legierungen sind nicht Bestandteil der Erfindung | | | | | | | | | | | |

Nach dem Erschmelzen der Lotlegierungen in einem Lichtbogenofen zu etwa 10g schweren Blöcken, wurden diesen Blöcken für die kaloriemetrischen Messungen Proben von 50-70 mg Masse entnommen. An diesen Proben wurde mittels DSC (Differential Scanning Calorimetry) das Aufschmelzverhalten der einzelnen Lotlegierungen untersucht. Als Kalorimeter wurde ein Netsch DSC 404 Gerät verwendet.

Tabelle 2 zeigt die anhand der DSC-Analyse bestimmten Solidus- und Liquidus-Punkte der untersuchten Lotlegierungen A2, A3, A5 und A10.

**Tabelle 2: Schmelzbereiche der Lotlegierungen**

| Lotlegierung | T solidus /°C | T liquidus /°C |
|---|---|---|
| A2 | 1059 | 1196 |
| A3 | 1010 | 1254 |
| A5 | 1039 | 1249 |
| A10 | 1068 | 1244 |

Die in Tabelle 2 aufgeführtenen Solidus- und Liquidus-Punkte verdeutlichen den der Erfindung zugrunde liegenden Effekt der zusätzlich zum Element Bor eingesetzten, schmelzpunkterniedrigenden Elemente Y und Pd.

Die Lotlegierung A10 weist neben Bor weder Y noch Pd auf, und besitzt dementsprechend die höchste Solidustemperatur 1068°C und eine Liquidustemperatur von 1244°C.

Lotlegierung A5 enthält 0,5 Gew-% Y aber kein Pd. A5 weist eine im Vergleich zu A10 deutlich abgesenkte Solidustemperatur von 1039°C auf, dessen Liquidustemperatur liegt aber mit 1249°C sogar etwas höher als A10.

Ein ähnlicher Effekt tritt bei A3 auf, welches 4 Gew.-% Pd enthält aber kein Y.

Werden Y und Pd gezielt kombiniert wie in Lotlegierung A2, werden sowohl Solidustemperatur (1059 °C) als auch Liquidustemperatur (1196 °C) gegenüber A10 erheblich abgesenkt. Diese Tatsache hat zur Folge, dass der Schmelzbereich als Differenz zwischen Liquiduspunkt und Soliduspunkt mit 137°C im Vergleich zu den anderen Lotlegierungen bei A2 am geringsten ausfällt. Dieser Umstand ist insofern vorteilhaft, als dass ein geringer Schmelzbereich ein schnelles und vollständiges Aufschmelzen der Lotlegierung beim Erhitzen ermöglicht. Dadurch wird eine Segregation der aufschmelzenden Lotlegierung verhindert und gleichzeitig ein optimales Benetzungs- und Rissfüllvermögen gewährleistet.

Daher ist die Kombination der beiden Legierungselemente Yttrium und Palladium und deren Verwendung neben Bor als Schmelzpunkterniedriger in der erfindungsgemäßen Lotlegierung besonders vorteilhaft.

Eine derart in ihrer Zusammensetzung optimierte Lotlegierung ist bislang aus dem Stand der Technik nicht bekannt.

Die Löttemperatur des hier beschriebenen Lotlegierung ist auf die verschiedenen Lösungsglühtemperaturen der polykristallinen oder gerichtet erstarrten oder einkristallinen Legierungen abgestimmt.

Weiterhin liegt es im Sinne der hier vorliegenden Erfindung, auf Basis der erfindungsgemäßen Lotlegierung ein neuartiges Mehrkomponenten-Lötsystem bereitzustellen. Das neuartige Mehrkomponenten-Lötsystem besteht aus der erfindungsgemäßen Lotlegierung, wie sie oben beschrieben wurde, und zusätzlich aus mindestens einem Additivwerkstoff. Durch Vermengen der Lotlegierung und des Additivwerkstoffs erhält man das Mehrkomponenten-Lötsystem, wobei das Vermengen nicht auf die pulverförmigen Komponenten beschränkt sein muss.

Um die pulverförmigen Komponenten des Mehrkomponenten-Lötsystems auf die zu reparierenden Bereiche auftragen zu können, werden im Sinne der Erfindung diese Komponenten mit einem Binder vermengt. Die daraus entstehende Paste wird mit Hilfe einer Spritze oder mit Hilfe eines Spachtels auf die zu reparierenden Bereiche aufgetragen. Der Anteil des Binders im Mehrkomponenten-Lötsystem beträgt 1-15 Gew.-% der pulverförmigen Komponenten.

Bei den Additivwerkstoffen handelt es sich um Metallpulver einer Legierung, deren Schmelzbereich über dem Schmelzbereich der Lotlegierung liegt. Die Additivwerkstoffe können Nickelbasis- oder Kobaltbasislegierungen sein. Durch gezieltes Vermengen der erfindungsgemäßen Lotlegierung mit den Additivwerkstoffen wird ein Mehrkomponenten-Lötsystem bereitgestellt, das speziell an einen Werkstoff eines zu reparierenden Bauteils, insbesondere einer Leitschaufel einer Turbine, angepasst ist. Das Mehrkomponenten-Lötsystem besteht demnach aus einer variablen Pulvermenge der Lotlegierung mit einem Additivwerkstoff, wobei das Mischungsverhältnis aus Lotlegierung und Additivwerkstoff frei wählbar ist. Die Auswahl des geeigneten Mischungsverhältnisses obliegt daher dem hier angesprochenen Fachmann.

Bevorzugt sind Additivwerkstoffe, nämlich ein Metallpulver, welche neben Nickel (Ni) eine oder mehrere der folgenden Elemente enthalten:
Chrom (Cr) in einem Anteil von bis zu 30 Gew.-%,
Kobalt (Co) in einem Anteil von bis zu 20 Gew.-%,
Wolfram (W) in einem Anteil von bis zu 15 Gew.-%,
Molybdän (Mo) in einem Anteil von bis zu 10 Gew.-%,
Aluminium (Al) in einem Anteil von bis zu 10 Gew.-%,
Tantal (Ta) in einem Anteil von bis zu 10 Gew.-%,
Titan (Ti) in einem Anteil von bis zu 10 Gew.-%,
Rhenium (Re) in einem Anteil von bis zu 10 Gew.-%,
Eisen (Fe) in einem Anteil von bis zu 5 Gew.-%,
Niob (Nb) in einem Anteil von bis zu 5 Gew.-%,
Yttrium (Y) in einem Anteil von bis zu 5 Gew.-%
Hafnium (Hf) in einem Anteil von bis zu 5 Gew.-%,
Palladium (Pd) in einem Anteil von bis zu 5 Gew.-%,
Kohlenstoff (C) in einem Anteil von bis zu 1 Gew.-%,
Zirkonium (Zr) in einem Anteil von bis zu 1 Gew.-%,
Bor (B) in einem Anteil von bis zu 1 Gew.-%,
Silizium (Si) in einem Anteil von bis zu 1 Gew.-%.

Bevorzugt verfügt der Additivstoff über folgende Zusammensetzung:
Chrom (Cr) in einem Anteil von 13,7 - 14,3 Gew.-%,
Kobalt (Co) in einem Anteil von 9 - 10 Gew.-%,
Wolfram (W) in einem Anteil von 3,7- 4,3 Gew.-%,
Molybdän (Mo) in einem Anteil von 3,7 - 4,3 Gew.-%,
Aluminium (Al) in einem Anteil von 2,8 - 3,2 Gew.-%,
Titan (Ti) in einem Anteil von 4,8 - 5,2 Gew.-%,
Kohlenstoff (C) in einem Anteil 0,15 - 0,19 Gew.-%,
Zirkonium (Zr) in einem Anteil von 0,03 - 0,1 Gew.-%,
Bor (B) in einem Anteil von 0,01 - 0,02 Gew.-%,
Nickel (Ni) im Restanteil, sodass die Summe der Anteile 100 Gew.-% ergibt.

Die mechanischen Eigenschaften der Mehrkomponenten-Lötsysteme bestehend aus Lotlegierung und Additivwerkstoff wurden systematisch untersucht, um sicherzustellen, dass die Lotgefüge in den reparierten Bereichen aufgrund ihrer statischen und zyklischen Festigkeit über eine ausreichend hohe Widerstandskraft gegenüber den thermischen und mechanischen Belastungen in den Gasturbinen verfügen.

Zu diesem Zweck wurden nachfolgende Warmzugversuche und Ermüdungsversuche (LCF) durchgeführt.

Die hier beschriebenen Versuche wurden an einem ausgewählten Mehrkomponenten-Lötsystem durchgeführt, das sich durch gutes Aufschmelzverhalten und gutes Rissfüllvermögen auszeichnet. Dazu wurde die Lotlegierung A2 mit einem Additivwerkstoff M1 im Mischungsverhältnis 1:1 (Gewichtsprozent) vermengt, wobei M1 folgende Zusammensetzung aufweist:
Chrom (Cr) in einem Anteil von 13,7 - 14,3 Gew.-%,
Kobalt (Co) in einem Anteil von 9 - 10 Gew.-%,
Wolfram (W) in einem Anteil von 3,7 - 4,3 Gew.-%,
Molybdän (Mo) in einem Anteil von 3,7 - 4,3 Gew.-%,
Aluminium (Al) in einem Anteil von 2,8 - 3,2 Gew.-%,
Titan (Ti) in einem Anteil von 4,8 - 5,2 Gew.-%,
Kohlenstoff (C) in einem Anteil 0,15 - 0,19 Gew.-%,
Zirkonium (Zr) in einem Anteil von 0,03 - 0,1 Gew.-%,
Bor (B) in einem Anteil von 0,01 - 0,02 Gew.-%,
Nickel (Ni) im Restanteil, sodass die Summe der Anteile 100 Gew.-% ergibt.

Die Warmzugversuche wurden bei einer Temperatur von 871 °C ±3°C durchgeführt. Die Proben werden mittels eines Strahlungsofens erhitzt, so dass über die gesamte Probe eine homogene Temperaturverteilung gewährleistet wurde. Die Versuche wurden an einer servohydraulischen Maschine durchgeführt. Die Abzugsgeschwindigkeit betrug 0,93 mm/min, so dass die Versuche als weggesteuert einzustufen sind.

Als Proben wurden Flachzugproben aus der DS Legierung René-142 mit einem Querschnitt von 6,35 x 1,5 mm und einer Mess-Strecke von 25,4 mm verwendet. Die Flachproben wurden den sonst verwendeten Rundproben vorgezogen, da sie von ihren Abmessungen her dem Anwendungsfall näher kommen; sie bilden dabei das dünnwandige Schaufelblatt einer Turbinenleitschaufel mit einer Wanddicke von 1,5 mm nach.

Getestet wurden jeweils drei Proben mit durchgängigen Lötspalten von 0,25 mm, 0,5 mm und 1,0 mm Breite, die mit dem beschriebenen Mehrkomponenten-Lötsystem A2/M 1 gelötet bzw. verfüllt wurden.

Tabelle 3 zeigt die Mittelwerte der gemessenen Warmzugfestigkeiten (UTS), ebenfalls aufgeführt sind die UTS-Werte der Nickelbasislegierungen René-80 (polykristallin) und DS René-142 (gerichtet erstarrt) als Grundwerkstoffdaten.

**Tabelle 3: Warmzugfestigkeiten (UTS) des Mehrkomponenten-Lötsystems A2/M 1 für unterschiedliche Spaltweiten**

| Lötsystem | Spalt /mm | UTS/MPa |
|---|---|---|
| A2/M 1 | 0,25 | 643 |
| | 0,50 | 519 |
| | 1,00 | 547 |
| | | |
| | Rene-80 | 648 |
| | René-142 DS | 858 |

Aus Tabelle 3 geht hervor, dass das Mehrkomponenten-Lötsystem A2/M 1 über bemerkenswert gute Warmzugeigenschaften verfügt.

Für eine Spaltbreite von 0,25 mm entspricht die gemessenen Warmzugfestigkeit (UTS) von A2/M 1 dem Wert des Grundwerkstoffs René-80, was einem UTS-Wert von 75% von DSR142 entspricht. Auch bei einer Spaltbreite von 0,5 mm und 1,0 mm werden noch 80% (bezogen auf René-80) bzw. 60% (bezogen auf René-142) der Warmzugfestigkeit (UTS) erreicht.

Die Warmzugversuche geben Anhaltswerte für die Festigkeitseigenschaften der Lotgefüge. Die Ergebnisse der LCF-Versuche haben eine höhere Aussagekraft, da sie die thermomechanische Wechselbeanspruchung der Gasturbinen-Bauteile praxisnäher wiedergeben.

Die Testtemperatur der LCF-Versuche betrug 982°C +/- 10°C, wobei die Flachproben aus der DS Legierung René-142 induktiv aufgeheizt wurden. Die Flachzugproben weisen einen Querschnitt von 9,53 x 1,55 mm und einer Mess-Strecke von 12,7 mm auf. Der Versuch wurde als axialer, kraftgeregelter Zug-Schwellversuch mit sinusförmigen Lastverlauf durchgeführt. Dabei wurden 20 Zyklen/min mit einem Verhältnis von Spannungsamplitude/Mittelspannung von 0,95 auf die Probe aufgebracht.

Bei unterschiedlichen Maximalspannungen wurden wie bei den Warmzugversuchen Flachproben das Mehrkomponenten-Lötsystem A2/M 1 mit drei durchgängigen Lötspalten von 0,25 mm, 0,5 mm und 1,0 mm verwendet.

Die Ergebnisse der LCF-Versuche sind als Mittelwerte in Tabelle 4 aufgeführt.

**Tabelle 4: LCF-Daten (Mittelwerte) des Mehrkomponenten- Lötsystems A2/M 1 für verschiedene Spaltbreiten und Maximalspannungen.**

| Lötsystem | Spaltbreite /mm | Max. Spannung /MPa | Lastwechsel |
|---|---|---|---|
| A2/M 1 | 0,25 | 152 | 50244 |
| | | 173 | 6729 |
| | | 207 | 4626 |
| | | 241 | 702 |
| A2/M 1 | 0,5 | 152 | 9146 |
| | | 173 | 11785 |
| | | 241 | 949 |
| A2/M 1 | 1,0 | 152 | 9679 |
| | | 173 | 4406 |
| | | 207 | 842 |
| | | 241 | 454 |
| René-142 DS | | 311 | 13243 |
| | | 345 | 7369 |
| | | 380 | 2793 |
| | | 414 | 1283 |
| René-80 | | 283 | 5000 |
| | | 276 | 7000 |
| | | 262 | 10000 |
| | | 255 | 30000 |

Tabelle 4 zeigt, dass das Mehrkomponenten-Lötsystem A2/M1 über bemerkenswert gute Ermüdungseigenschaften verfügt.

Die LCF-Versuche zeigen wie die Warmzugversuche eine Abhängigkeit der Ermüdungs- bzw. Zugschwellfestigkeit von der Spaltbreite der Lotgefüge. Für eine Lastwechselzahl von 5000 Zyklen als einen typischen Wert für LCF-Versuche beträgt die Ermüdungsfestigkeit der A2/M1 Lotgefüge für Spaltbreiten von 0,25 mm und 0,5 mm 65-70% des Wertes vom René-80 Grundwerkstoff bzw. 50-55% des Wertes vom René-142 Grundwerkstoff. Für eine Spaltbreite von 1,0 mm ist nur ein geringer Abfall auf 60% (bezogen auf René-80) bzw. 48% der Ermüdungsfestigkeit des Grundwerkstoffs (bezogen auf René-142) festzustellen.

Die hier gemessenen Ermüdungs- bzw. Zugschwellfestigkeiten des Mehrkomponenten-Lötsystem A2/M 1 sind deutlich höher als die nach dem Stand der Technik bekannten Mehrkomponenten-Lötsysteme.

Mithilfe der erfindungsgemäßen Lotlegierung bzw. des erfindungsgemäßen Mehrkomponenten-Lötsystem lässt sich ein neuartiges Verfahren zur Bearbeitung, vorzugsweise Reparatur, von Werkstücken, nämlich zur Bearbeitung von Leitschaufeln eines Flugzeugtriebwerks, bereitstellen. Die Werkstücke können aus einer polykristallinen oder gerichtet erstarrten oder einkristallinen Legierung hergestellt sein.

Das erfindungsgemäße Verfahren basiert auf einem Hochtemperatur-Diffusionslöten unter Verwendung der erfindungsgemäßen Lotlegierung bzw. unter Verwendung des erfindungsgemäßen Mehrkomponenten-Lötsystem. Es handelt sich hierbei um ein Reparaturverfahren. Das Hochtemperatur-Diffusionslöten erfolgt unter folgenden Bedingungen:
- Aufheizen unter Vakuum oder Schutzgas auf eine Temperatur von 1200 - 1260°C mit einer anschließenden Haltezeit von 15 - 60 min,
- Abkühlen unter Vakuum oder Schutzgas auf eine Temperatur von 1100 - 1140°C mit einer anschließenden Haltezeit von ca. 240 min,
- Abkühlen unter Vakuum oder Schutzgas auf eine Temperatur von 1080 - 1 120°C mit einer anschließenden Haltezeit von ca. 60 min.

An das Hochtemperatur-Diffusionslöten kann sich folgende Wärmebehandlung anschließen: Aufheizen unter Vakuum oder Schutzgas auf eine Temperatur von 1065-1093°C mit einer anschließenden Haltezeit von ca. 240 min, wobei dies vorzugsweise im Rahmen eines Beschichtungsprozesses durchgeführt wird.

Weiterhin kann sich an das Hochtemperatur-Diffusionslöten folgende Wärmebehandlung anschließen: Aufheizen unter Vakuum oder Schutzgas oder Umgebungsatmosphäre auf eine Temperatur von 871-927°C mit einer anschließenden Haltezeit von 60 - 960 min, wobei dies vorzugsweise im Rahmen eines Auslagerungsprozesses durchgeführt wird.

Es ist selbstverständlich, dass die Verwendung der Lotlegierung und des Mehrkomponenten-Lötsystems nicht auf reine Reparaturverfahren beschränkt ist. Vielmehr ist die erfindungsgemäße Lotlegierung sowie das erfindungsgemäße Mehrkomponenten-Lötsystem allgemein auch für Fügeprozesse anwendbar. Bedingt durch das für Reparaturzwecke optimierte Mischungsverhältnis von Lotlegierung und ggf. Additivwerkstoffen, ist jedoch die Verwendung bei der Reparatur von Leitschaufeln eines Flugzeugtriebwerks besonders vorteilhaft.

## Patentansprüche

1. Lotlegierung auf Nickelbasis, wobei die Lotlegierung mindestens folgende Elemente enthält:
Chrom (Cr), Kobalt (Co), Molybdän (Mo) und Nickel (Ni), **gekennzeichnet durch**:
Chrom (Cr) in einem Anteil von 5 - 17 Gew.-%,
Kobalt (Co) in einem Anteil von 8 - 15 Gew.-%,
Molybdän (Mo) in einem Anteil von 1 - 5 Gew.-%,
Aluminium (Al) in einem Anteil von 2 - 8 Gew.-%,
Tantal (Ta) in einem Anteil von 1 - 8 Gew.-%,
Niob (Nb) in einem Anteil von 0,1 - 2 Gew.-%,
Yttrium (Y) in einem Anteil von 0,1 - 1 Gew.-%,
Hafnium (Hf) in einem Anteil von 1 - 5 Gew.-%,
Palladium (Pd) in einem Anteil von 0,5 - 5 Gew.-%,
Bor (B) in einem Anteil von 0,5 - 2,5 Gew.-%,
Silizium (Si) in einem Anteil von 0,1 - 1 Gew.-%,
Nickel (Ni) im Restanteil, sodass die Summe der Anteile 100 Gew.-% ergibt.

2. Lotlegierung **gekennzeichnet durch**:
Chrom (Cr) in einem Anteil von 9 - 11 Gew.-%,
Kobalt (Co) in einem Anteil von 9 - 11 Gew.-%,
Molybdän (Mo) in einem Anteil von 3,5 - 4,5 Gew.-%,
Aluminium (A1) in einem Anteil von 3,5 - 4,5 Gew.-%,
Tantal (Ta) in einem Anteil von 1,5 - 2,5 Gew.-%,
Niob (Nb) in einem Anteil von 0,5 - 1,5 Gew.-%,
Yttrium (Y) in einem Anteil von 0,1 - 0,5 Gew.-%,
Hafnium (Hf) in einem Anteil von 3,5 - 4,5 Gew.-%,
Palladium (Pd) in einem Anteil von 3,5 - 4,5 Gew.-%,
Bor (B) in einem Anteil von 1,5 - 2,0 Gew.-%,
Nickel (Ni) im Restanteil, sodass die Summe der Anteile 100 Gew.-% ergibt.

3. Verwendung einer Lotlegierung nach einem der Ansprüche 1 und 2 zur Reparatur von Bauteilen einer Gasturbine, insbesondere zur Reparatur der Leitschaufeln einer Gasturbine, wobei die Gasturbine als Flugzeugtriebwerk oder stationäre Gasturbine ausgebildet ist.

4. Mehrkomponenten-Lötsystem, bestehend aus einer Lotlegierung und einem Additivwerkstoff als Komponenten des Mehrkomponenten-Lötsystems, **gekennzeichnet durch** eine Lotlegierung nach einem der Ansprüche 1 und 2 und **durch** mindestens einen Additivwerkstoff, dessen Schmelzbereich über dem Schmelzpunkt der Lotlegierung liegt.

5. Mehrkomponenten-Lötsystem nach Anspruch 4, **dadurch gekennzeichnet, dass** der Additivwerkstoff einer Nickelbasislegierung oder Kobaltbasislegierung entspricht.

6. Mehrkomponenten-Lötsystem nach Anspruch 4 oder 5, **dadurch gekennzeichnet, dass** der Additivwerkstoff auf Nickelbasis ausgebildet ist und neben Nickel (Ni) ein oder mehrere der folgenden Elemente enthält:
Chrom (Cr) in einem Anteil von bis zu 30 Gew.-%,
Kobalt (Co) in einem Anteil von bis zu 20 Gew.-%,
Wolfram (W) in einem Anteil von bis zu 15 Gew.-%,
Molybdän (Mo) in einem Anteil von bis zu 10 Gew.-%,
Aluminium (Al) in einem Anteil von bis zu 10 Gew.-%,
Tantal (Ta) in einem Anteil von bis zu 10 Gew.-%,
Titan (Ti) in einem Anteil von bis zu 10 Gew.-%,
Rhenium (Re) in einem Anteil von bis zu 10 Gew.-%,
Eisen (Fe) in einem Anteil von bis zu 5 Gew.-%,
Niob (Nb) in einem Anteil von bis zu 5 Gew.-%,
Yttrium (Y) in einem Anteil von bis zu 5 Gew.-%,
Hafnium (Hf) in einem Anteil von bis zu 5 Gew.-%,
Palladium (Pd) in einem Anteil von bis zu 5 Gew.-%,
Kohlenstoff (C) in einem Anteil von bis zu 1 Gew.-%,
Zirkonium (Zr) in einem Anteil von bis zu 1 Gew.-%,
Bor (B) in einem Anteil von bis zu 1 Gew.-%,
Silizium (Si) in einem Anteil von bis zu 1 Gew.-%.
Nickel (Ni) im Restanteil, sodass die Summe der Anteile 100 Gew.-% ergibt.

7. Mehrkomponenten-Lötsystem nach einem oder mehreren der Ansprüche 4 bis 7,
**dadurch gekennzeichnet, dass** der Additivwerkstoff auf Nickelbasis ausgebildet ist und neben Nickel (Ni) ein oder mehrere der folgenden Elemente enthält:
Chrom (Cr) in einem Anteil von 13,7 - 14,3 Gew.-%,
Kobalt (Co) in einem Anteil von 9 - 10 Gew.-%,
Wolfram (W) in einem Anteil von 3,7 - 4,3 Gew.-%,
Molybdän (Mo) in einem Anteil von 3,7 - 4,3 Gew.-%,
Aluminium (Al) in einem Anteil von 2,8 - 3,2 Gew.-%,
Titan (Ti) in einem Anteil von 4,8 - 5,2 Gew.-%,
Kohlenstoff (C) in einem Anteil 0,15 - 0,19 Gew.-%,
Zirkonium (Zr) in einem Anteil von 0,03 - 0,1 Gew.-%,
Bor (B) in einem Anteil von 0,01 - 0,02 Gew.-%,
Nickel (Ni) im Restanteil, sodass die Summe der Anteile 100 Gew.-% ergibt.

8. Verwendung eines Mehrkomponenten-Lötsystems nach einem oder mehreren der Ansprüche 4 bis 7 zur Reparatur von Bauteilen einer Gasturbine, insbesondere zur Reparatur der Leitschaufeln einer Gasturbine, wobei die Gasturbine als Flugzeugtriebwerk oder stationäre Gasturbine ausgebildet ist.

9. Verfahren zur Bearbeitung, insbesondere zur Reparatur oder Fertigung, von Werkstücken, insbesondere von Leitschaufeln einer Gasturbine, wobei die Bearbeitung des Werkstücks durch Löten mit einer Lotlegierung gemäß Anspruch 1 oder 2 oder mit einem Mehrkomponenten-Lötsystem gemäß einem oder mehreren der Ansprüche 4 bis 7 erfolgt.

10. Verfahren nach Anspruch 9, **gekennzeichnet durch** ein Mehrkomponenten-Lötsystem nach einem oder mehreren der Ansprüche 4 bis 7.

11. Verfahren nach einem der Ansprüche 9 und 10, **dadurch gekennzeichnet, dass** Hochtemperatur-Diffusionslöten als Lötverfahren eingesetzt wird.

12. Verfahren nach Anspruch 11, **dadurch gekennzeichnet, dass** das Hochtemperatur-Diffusionslöten als Lötverfahren unter folgenden Bedingungen erfolgt:
Aufheizen unter Vakuum oder Schutzgas auf eine Temperatur von 1200 - 1260°C mit einer anschließenden Haltezeit von 15-60 min,
Abkühlen unter Vakuum oder Schutzgas auf eine Temperatur von 1100 - 1140°C mit einer anschließenden Haltezeit von ca. 240 min,
Abkühlen unter Vakuum oder Schutzgas auf eine Temperatur von 1080 - 1120°C mit einer anschließenden Haltezeit von ca. 60 min.

13. Verfahren nach Anspruch 11 oder 12, **dadurch gekennzeichnet, dass** sich an das Hochtemperatur-Diffusionslöten folgende Wärmebehandlung anschließt:
Aufheizen unter Vakuum oder Schutzgas auf eine Temperatur von 1065-1093°C mit einer anschließenden Haltezeit von ca. 240 min, wobei dies vorzugsweise im Rahmen eines Beschichtungsprozesses durchgeführt wird.

14. Verfahren nach Anspruch 11 oder 12, **dadurch gekennzeichnet, dass** sich an das Hochtemperatur-Diffusionslöten folgende Wärmebehandlung anschließt:
Aufheizen unter Vakuum oder Schutzgas oder Umgebungsatmosphäre auf eine Temperatur von 871-927°C mit einer anschließenden Haltezeit von 60 - 960 min, wobei dies vorzugsweise im Rahmen eines Auslagerungsprozesses durchgeführt wird.

## Claims

1. A nickel-based solder alloy, the solder alloy containing at least the following elements:
chromium (Cr), cobalt (Co), molybdenum (Mo) and nickel (Ni), **characterised by**:
chromium (Cr) in a proportion of 5 - 17 wt.%,
cobalt (Co) in a proportion of 8 - 15 wt.%,
molybdenum (Mo) in a proportion of 1 - 5 wt.%,
aluminium (Al) in a proportion of 2 - 8 wt.%,
tantalum (Ta) in a proportion of 1 - 8 wt.%,
niobium (Nb) in a proportion of 0.1 - 2 wt.%,
yttrium (Y) in a proportion of 0.1 - 1 wt.%,
hafnium (Hf) in a proportion of 1 - 5 wt.%,
palladium (Pd) in a proportion of 0.5 - 5 wt.%,
boron (B) in a proportion of 0.5 - 2.5 wt.%,
silicon (Si) in a proportion of 0.1 - 1 wt.%,
nickel (Ni) in the remainder, so that the sum of the proportions totals 100 wt.%.

2. A solder alloy, **characterised by**:
chromium (Cr) in a proportion of 9 - 11 wt.%,
cobalt (Co) in a proportion of 9 - 11 wt.%,
molybdenum (Mo) in a proportion of 3.5 - 4.5 wt.%,
aluminium (Al) in a proportion of 3.5 - 4.5 wt.%,
tantalum (Ta) in a proportion of 1.5 - 2.5 wt.%,
niobium (Nb) in a proportion of 0.5 - 1.5 wt.%,
yttrium (Y) in a proportion of 0.1 - 0.5 wt.%,
hafnium (Hf) in a proportion of 3.5 - 4.5 wt.%,
palladium (Pd) in a proportion of 3.5 - 4.5 wt.%, boron (B) in a proportion of 1.5 - 2.0 wt.%,
nickel (Ni) in the remainder, so that the sum of the proportions totals 100 wt.%.

3. Application of a solder alloy according to one of claims 1 and 2 for repairing parts of a gas turbine, particularly for repairing the guide blades in a gas turbine, the gas turbine being constructed as an aeronautical engine or a stationary gas turbine.

4. A multi-component soldering system, consisting of a solder alloy and an additive material as components of the multi-component soldering system, **characterised by** a solder alloy according to one of claims 1 and 2 and by at least an additive material, whose melting range lies above the melting point of the solder alloy.

5. A multi-component soldering system according to claim 4, **characterised in that** the additive material is a nickel-based alloy or cobalt-based alloy.

6. A multi-component soldering system according to claim 4 or 5, **characterised in that** the additive material is nickel-based and contains one or more of the following elements in addition to nickel (Ni):
chromium (Cr) in a proportion of up to 30 wt.%,
cobalt (Co) in a proportion of up to 20 wt.%,
tungsten (W) in a proportion of up to 15 wt.%
molybdenum (Mo) in a proportion of up to 10 wt.%,
aluminium (Al) in a proportion of up to 10 wt.%,
tantalum (Ta) in a proportion of up to 10 wt.%,
titanium (Ti) in a proportion of up to 10 wt.%,
rhenium (Re) in a proportion of up to 10 wt.%,
iron (Fe) in a proportion of up to 5 wt.%,
niobium (Nb) in a proportion of up to 5 wt.%,
yttrium (Y) in a proportion of up to 5 wt.%,
hafnium (Hf) in a proportion of up to 5 wt.%,
palladium (Pd) in a proportion of up to 5 wt.%,
carbon (C) in a proportion of up to 1 wt.%,
zirconium (Zr) in a proportion of up to 1 wt.%,
boron (B) in a proportion of up to 1 wt.%,
silicon (Si) in a proportion of up to 1 wt.%,
nickel (Ni) in the remainder, so that the sum of the proportions totals 100 wt.%.

7. A multi-component soldering system according to any of claims 4 to 7 (sic), **characterised in that** the additive material is nickel-based and contains one or several of the following elements in addition to nickel (Ni):
chromium (Cr) in a proportion of 13.7 - 14.3 wt.%,
cobalt (Co) in a proportion of 9 - 10 wt.%,
tungsten (W) in a proportion of 3.7 - 4.3 wt.%,
molybdenum (Mo) in a proportion of 3.7 - 4.3 wt.%,
aluminium (Al) in a proportion of 2.8 - 3.2 wt.%,
titanium (Ti) in a proportion of 4.8 - 5.2 wt.%,
carbon (C) in a proportion of 0.15 - 0.19 wt.%,
zirconium (Zr) in a proportion of 0.03 - 0.1 wt.%,
boron (B) in a proportion of 0.01 - 0.02 wt.%,
nickel (Ni) in the remainder, so that the sum of the proportions totals 100 wt.%.

8. Application of a multi-component soldering system according to any of claims 4 to 7 for repairing parts of a gas turbine, particularly for repairing the guide blades in a gas turbine, the gas turbine being constructed as an aeronautical engine or stationary gas turbine.

9. A method for the treatment, particularly for the repair or manufacture, of workpieces, particularly of guide blades in a gas turbine, the treatment of the workpiece entailing soldering with a solder alloy according to claim 1 or 2 or with a multi-component soldering system according to any of claims 4 to 7.

10. A method according to claim 9, **characterised by** a multi-component soldering system according to any of claims 4 to 7.

11. A method according to any of claims 9 and 10, **characterised in that** high-temperature diffusion soldering is the soldering method used.

12. A method according to claim 11, **characterised in that** the high-temperature diffusion soldering as the soldering method is carried out under the following conditions:
heating under vacuum or inert gas to a temperature of 1200 - 1260 °C followed by a dwell time of 15 - 60 minutes,
cooling under vacuum or inert gas to a temperature of 1100 - 1140 °C followed by a dwell time of approx. 240 minutes,
cooling under vacuum or inert gas to a temperature of 1080 - 1120 °C followed by a dwell time of approx. 60 minutes.

13. A method according to claim 11 or 12, **characterised in that** the following heat treatment is carried out after the high-temperature diffusion soldering:
heating under vacuum or inert gas to a temperature of 1065 - 1093 °C followed by a dwell time of approx. 240 minutes, this preferably taking place as part of a coating process.

14. A method according to claim 11 or 12, **characterised in that** the following heat treatment is carried out after the high-temperature diffusion soldering:
heating under vacuum or inert gas or ambient atmosphere to a temperature of 871 - 927 °C followed by a dwell time of 60 - 960 minutes, this preferably taking place as part of an ageing process.

## Revendications

1. Alliage de brasage à base de nickel, l'alliage de brasage contenant au moins les éléments suivants :
Chrome (Cr), cobalt (Co), molybdène (Mo) et nickel (Ni),
**caractérisé par** :
Chrome (Cr) dans une proportion de 5 à 17 % en poids,
Cobalt (Co) dans une proportion de 8 à 15 % en poids,
Molybdène (Mo) dans une proportion de 1 à 5 % en poids,
Aluminium (Al) dans une proportion de 2 à 8 % en poids
Tantale (Ta) dans une proportion de 1 à 8 % en poids
Niobium (Nb) dans une proportion de 0,1 à 2 % en poids,
Yttrium (Y) dans une proportion de 0,1 à 1 % en poids,
Hafnium (Hf) dans une proportion de 1 à 5 % en poids,
Palladium (Pd) dans une proportion de 0,5 à 5 % en poids
Bore (B) dans une proportion de 0,5 à 2,5 % en poids,
Silicium (Si) dans une proportion de 0,1 à 1 % en poids,
Nickel (Ni) dans une proportion résiduelle, de manière à donner un total de 100 % en poids.

2. Alliage de brasage,
**caractérisé par** :
Chrome (Cr) dans une proportion de 9 à 11 % en poids,
Cobalt (Co) dans une proportion de 9 à 11 % en poids,
Molybdène (Mo) dans une proportion de 3,5 à 4,5 % en poids,
Aluminium (Al) dans une proportion de 3,5 à 4,5 % en poids
Tantale (Ta) dans une proportion de 1,5 à 2,5 %en poids
Niobium (Nb) dans une proportion de 0,5 à 1,5 % en poids,
Yttrium (Y) dans une proportion de 0,1 à 0,5 %en poids,
Hafnium (Hf) dans une proportion de 3,5 à 4,5 % en poids,
Palladium (Pd) dans une proportion de 3,5 à 4,5 % en poids
Bore (B) dans une proportion de 1,5 à 2,0 % en poids,
Nickel (Ni) dans une proportion résiduelle, de manière à donner un total de 100 % en poids.

3. Utilisation d'un alliage de brasage selon les revendications 1 et 2, pour la réparation de pièces d'une turbine à gaz, en particulier pour la réparation des aubes directrices d'une turbine à gaz, la turbine à gaz étant en forme de propulseur d'avion ou de turbine à gaz stationnaire.

4. Système de brasage à plusieurs composants, constitué d'un alliage de brasage et d'un additif en tant que composants du système de brasage à plusieurs composants,
**caractérisé par**
un alliage de brasage selon l'une quelconque des revendications 1 et 2 et par au moins un additif dont le domaine de fusion est supérieur au point de fusion de l'alliage de brasage.

5. Système de brasage à plusieurs composants selon la revendication 4,
**caractérisé en ce que**
l'additif correspond à un alliage à base de nickel ou un alliage à base de cobalt.

6. Système de brasage à plusieurs composants selon la revendication 4 ou la revendication 5,
**caractérisé en ce que**
l'additif est à base de nickel et contient, outre le nickel (Ni), un ou plusieurs des éléments ci-dessous :
Chrome (Cr) dans une proportion jusqu'à 30 % en poids,
Cobalt (Co) dans une proportion jusqu'à 20 % en poids,
Tungstène (W) dans une proportion jusqu'à 15 % en poids,
Molybdène (Mo) dans une proportion jusqu'à 10 % en poids,
Aluminium (Al) dans une proportion jusqu'à 10 % en poids,
Tantale (Ta) dans une proportion jusqu'à 10 % en poids,
Titane (Ti) dans une proportion jusqu'à 10 % en poids,
Rhénium (Re) dans une proportion jusqu'à 10 % en poids,
Fer (Fe) dans une proportion jusqu'à 5 % en poids,
Niobium (Nb) dans une proportion jusqu'à 5 % en poids,
Yttrium (Y) dans une proportion jusqu'à 5 % en poids,
Hafnium (Hf) dans une proportion jusqu'à 5 % en poids,
Palladium (Pd) dans une proportion jusqu'à 5 % en poids,
Carbone (C) dans une proportion jusqu'à 1 % en poids,
Zirconium (Zr) dans une proportion jusqu'à 1 % en poids,
Bore (B) dans une proportion jusqu'à 1 % en poids,
Silicium (Si) dans une proportion jusqu'à 1 % en poids,
Nickel (Ni) dans une proportion résiduelle, de manière à donner un total de 100 % en poids.

7. Système de brasage à plusieurs composants selon l'une quelconque ou plusieurs des revendications 4 à 7,
**caractérisé en ce que**
l'additif est à base de nickel et contient, outre le nickel, un ou plusieurs des éléments suivants :
Chrome (Cr) dans une proportion de 13,7 à 14,3 % en poids,
Cobalt (Co) dans une proportion de 9 à 10 % en poids,
Tungstène (W) dans une proportion de 3,7 à 4,3 % en poids,
Molybdène (Mo) dans une proportion de 3,7 à 4,3 % en poids,
Aluminium (Al) dans une proportion de 2,8 à 3,2 % en poids,
Titane (Ti) dans une proportion de 4,8 à 5,2 % en poids,
Carbone (C) dans une proportion de 0,15 à 0,19 % en poids,
Zirconium (Zr) dans une proportion de 0,03 à 0,1 % en poids,
Bore (B) dans une proportion de 0,01 à 0,02 % en poids,
Nickel (Ni) dans une proportion résiduelle, de manière à donner un total de 100 % en poids.

8. Utilisation d'un système de brasage à plusieurs composants selon l'une quelconque ou plusieurs des revendications 4 à 7 pour réparer des pièces d'une turbine à gaz, en particulier pour réparer des aubes directrices d'une turbine à gaz, la turbine à gaz étant en forme de propulseur d'avion ou bien de turbine à gaz stationnaire.

9. Procédé pour travailler, en particulier pour réparer ou fabriquer des pièces, en particulier des aubes directrices d'une turbine à gaz, la pièce étant travaillée par brasage avec un alliage de brasage selon la revendication 1 ou la revendication 2, ou avec un système de brasage à plusieurs composants selon l'une quelconque ou plusieurs des revendications 4 à 7.

10. Procédé selon la revendication 9,
**caractérisé par**
un système de brasage à plusieurs composants selon l'une quelconque ou plusieurs des revendications 4 à 7.

11. Procédé selon l'une quelconque des revendications 9 et 10,
**caractérisé en ce qu'**
on utilise le brasage-diffusion à haute température comme procédé de brasage.

12. Procédé selon la revendication 11,
**caractérisé en ce qu'**
on réalise le brasage-diffusion à haute température comme procédé de brasage dans les conditions suivantes :
- échauffement sous vide ou gaz protecteur à une température de 1 200 à 1 260 °C avec un temps de maintien subséquent de 15 à 60 minutes,
- refroidissement sous vide ou gaz protecteur à une température de 1 100 à 1 140 °C avec temps de maintien subséquent d'environ 240 minutes,
- refroidissement sous vide ou gaz protecteur à une température de 1 080 à 1 120 °C avec un temps de maintien subséquent d'environ 60 minutes.

13. Procédé selon la revendication 11 ou la revendication 12,
**caractérisé en ce que**
le brasage-diffusion à haute température est suivi du traitement thermique suivant : échauffement sous vide ou gaz protecteur à une température de 1 065 à 1 093 °C avec un temps de maintien subséquent d'environ 240 minutes, ceci étant réalisé de préférence dans le cadre d'un processus de revêtement.

14. Procédé selon la revendication 11 ou la revendication 12,
**caractérisé en ce que**
le brasage-diffusion à haute température est suivi du traitement thermique suivant : échauffement sous vide ou gaz protecteur à une température de 871 à 927 °C avec un temps de maintien subséquent 60 à 960 minutes, ceci étant réalisé de préférence dans le cadre d'un processus de durcissement par précipitation.
